# EUROPÄISCHE PATENTANMELDUNG

(11) **EP 2 103 637 A2**
(43) Veröffentlichungstag der Anmeldung: **23.09.2009**
(21) Anmeldenummer: 09155740.5
(22) Anmeldetag: 20.03.2009
(51) Int. Cl.: C08G 18/08, C08G 18/10, C08G 18/12, C08G 18/40, C08G 18/42, C08G 18/48, C08G 18/62

(54) **Formgedächtnis-Polymere und Verfahren zu ihrer Herstellung**

(30) Priorität: 20.03.2008 DE 102008016123
(71) Anmelder: GT Elektrotechnische Produkte GmbH, 79761 Waldshut-Tiengen (DE)
(72) Erfinder: Paulmann, Uwe, 79790 Küssaberg (DE); Behrendt, Gerhard, 23566 Lübeck (DE)
(74) Vertreter: Gulde Hengelhaupt Ziebig & Schneider

(57) **Zusammenfassung**

Die Erfindung betrifft ein Verfahren zur Herstellung von Formgedächtnis-Polymeren (Shape Memory Polymeren) die eine schwach vernetzte Polymerstruktur mit einer breiten Verteilung der Netzkettenabstände und einem temperaturunabhängigen Plateaumodul (tan 5) im Bereich von mindestens 10 K zwischen -20 und +90°C besitzen. Erfindungsgemäß werden pulverisierte lineare Polymere und/oder Oligomere mit mindestens zwei reaktiven Gruppen mit einem pulverisierten, mindestens eine trifunktionelle Komponente enthaltenden isocyanatgruppenhaltigen Oligomeren und/oder Polymeren vermischt und unter Erhitzen auf Temperaturen oberhalb 80°C umgesetzt. Gegenstand der Erfindung sind auch neue Formgedächtnis-Polymere.

## Beschreibung

Die Erfindung betrifft neue Formgedächtnis-Polymere (Shape Memory Polymere) und Verfahren zu ihrer Herstellung durch vernetzende Formgebung aus linearen Oligomeren oder Polymeren durch Umsetzung mit verzweigten Reaktanden.
Shape Memory Polymere sind eine bekannte Gruppe von Polymeren mit einer temperatursensitiven Struktur. Im wesentlichen bestehen sie nach dem Stand der Technik aus zwei Phasen, einer eingefrorenen Phase und einer Phase mit über der Temperatur veränderlichen Eigenschaften. Üblicherweise werden derartige Polymere aus trans-Polyisopren, Styren-Butadien-Copolymeren, Ethylen-Propylen-Dien-Mischpolymerisaten (EPDM), Polyamiden, Polysiloxanen, Polyetheramiden, Polyetherestern, Polyacrylaten oder Polyurethanen hergestellt. In der Regel sind diese Shape Memory Polymere unvernetzt. Es werden jedoch auch einige vernetzte Typen auf der Basis von EPDM oder - in neueren Arbeiten - bei Polyurethanen mit Hartsegmentvernetzungen beschrieben.
Nach dem Stand der Technik wird in solchen Polymeren die nicht eingefrorene Phase aus kristallisationsfähigen weichen Domänen mit einer Schmelztemperatur in der Größenordnung der Temperatur der Anwendung des Effekts der Gedächtniswirkung gebildet während die eingefrorene Phase aus harten Domänen gebildet wird und die Festpunkte der Struktur darstellt. Shape Memory Polymere werden z. B. ausführlich beschrieben in A. Lendlein, S. Kelch, Angew. Chem. Int. Ed. 41, 2034-2057 (2002). Im Hartsegment durch kurzkettige Triole vernetzte Shape Memory Polymere werden z. B. beschrieben in B. C. Chun, M. H. Chong, Y. C. Chung, J. Mater. Sci. 42, 6524-6531 (2007) (als Vernetzer wird Glycerol verwendet) oder in Y. Liu, K. Gall, M. L. Dunn, P. McCluskey, Mechanics Mater. 36, 929 - 940 (2004) (als Vernetzer wird Trimethylolpropan verwendet). In der zuletzt genannten Arbeit werden zusätzlich Siliziumcarbid-Nanoteilchen als Verstärkung eingesetzt.
Shape Memory Polyurethane mit einem Hartsegment und wenigstens zwei Weichsegmenten werden zum Beispiel in der US-PS 6,720,402 beschrieben. Dabei soll der Schmelzpunkt oder der Glasübergang des Hartsegments wenigstens 10°C, vorzugsweise 20°C, höher sein als die entsprechenden Werte für das Weichsegment. Das Gewichtsverhältnis des Hartsegments zum Weichsegment soll im Bereich zwischen 5 : 95 und 95 : 5 liegen. In der US-OS werden Beispiele für Shape Memory Polymer-Blends auf der Basis von thermoplastischen Polymeren, z. B. einem kristallinen Polymeren wie PVDF, Polylactid, Polyhydroxybutyral, Polyethylenglykol-Polyethylen, Ethylen-Vinylacetat-Copolymeren, PVC, Polyvinylidenchlorid sowie einem amorphen Polymeren wie Polyvinylacetat, PMMA oder weiterer Acrylatpolymere beschrieben. In der US-PS 7,091,297 werden thermoplastische Polyurethane mit alternierender Sequenz von Hart- und Weichsegmenten mit einem integrierten oligomeren Silesquioxandiol als Kettenverlängerer sowie Diisocyanaten beschrieben.
Nach der US-PS 5,145,935 werden solche Shape Memory Polyurethane mit einer Kristallinität von 3 bis 50 Gew.-% durch Polymerisation eines Isocyanatprepolymeren, einem difunktionellen Diol und einem difunktionellen Kettenverlängerer hergestellt. Von diesem Gemisch können durch Spritzguss, Extrusion oder Blasformverfahren Formteile hergestellt oder durch freie Verarbeitung Teile ohne Form hergestellt werden. Nach der US-PS 4,722,946 werden energieabsorbierende Polyurethanelastomere oder -Schaumstoffe auf der Basis von linearen und verzweigten Polyolen, einem Polyisocyanat und ggf. einem Treibmittel bei einem Isocyanatindex von 65 bis 85 hergestellt. Zellige Shape Memory Polyurethane werden nach der US-PS 3,939,106 aus einem Polymerpolyol, einem aromatischen Polyamin, einem aromatischen Glykol und einem organischen Polyisocyanat hergestellt. Nach der Lehre der US-PS 4,980,386 werden energieabsorbierende Polyurethane durch Umsetzung von Polyolen mit Polyisocyanaten der Funktionalität über 2,3 bei einem Isocyanatindex von 65 bis 90 hergestellt.
Shape Memory Polyurethane auf der Basis von Polytetrahydrofuran mit Vernetzungen im Hart- und Weichsegment werden von S. H. Lee, J. W. Koo und B. K. Kim in Smart Mater. Struct. 13, 1345-50 (2004) beschrieben.
Der Erfindung lag die Aufgabe zugrunde, neue Formgedächtnis-Polymere bereitzustellen und einfache Verfahren zu deren Herstellung zu finden.
Überraschend wurde nun gefunden, dass es zu der nach dem Stand der Technik üblicherweise verwendeten Struktur mit kristallinen bzw. kristallisationsfähigen weichen Domänen und harten Domänen als Fixationspunkte der Struktur alternative Strukturen gibt, die einen sehr ähnlichen oder sogar stärkeren Shape Memory Effekt haben, aber auf einfacherem Wege nach einem anderen Verfahren hergestellt werden können. Erfindungsgemäß können Shape Memory Polymere durch vernetzende Formgebung aus linearen Oligomeren oder Polymeren durch Umsetzung mit verzweigten Reaktanden hergestellt werden, die Strukturen mit einem in dem Temperaturanwendungsbereich nahezu konstanten Modul darstellen.
Erfindungsgemäß wird die Aufgabe dadurch gelöst, dass lineare Polymere und/oder Oligomere mit mindestens zwei reaktiven Gruppen mit mindestens eine trifunktionelle Komponente enthaltenden isocyanatgruppenhaltigen Oligomeren und/oder Polymeren in Gegenwart von ggf. Katalysatoren oder Additiven umgesetzt werden und eine schwach vernetzte Polymerstruktur mit einer breiten Verteilung der Netzkettenabstände sowie einem in einem bestimmten Temperaturbereich nahezu temperaturkonstanten Verlustmodul (tan δ) hergestellt werden.

Das erfindungsgemäße Verfahren zur Herstellung von Formgedächtnis-Polymeren (Shape Memory Polymeren) durch vernetzende Formgebung aus linearen Oligomeren oder Polymeren durch Umsetzung mit verzweigten Reaktanden ist dadurch gekennzeichnet, dass
a) pulverisierte lineare Polymere und/oder Oligomere mit mindestens zwei reaktiven Gruppen mit
b) einem pulverisierten, mindestens eine trifunktionelle Komponente enthaltenden isocyanatgruppenhaltigen Oligomeren und/oder Polymeren vermischt und
c) unter Erhitzen auf Temperaturen oberhalb 80°C umgesetzt und ggf. geformt werden.

Die so hergestellten Formgedächtnis-Polymere besitzen eine schwach vernetzte Polymerstruktur mit einer breiten Verteilung der Netzkettenabstände und einem temperaturunabhängigen Plateaumodul (tan δ) im Bereich von mindestens 10 K zwischen -20 und +90°C.
Als lineare Polymere und/oder Oligomere werden bevorzugt Verbindungen verwendet, die durch Polymerisation aus mindestens einer ethylenisch ungesättigten Verbindung entstanden sind und die eine zusätzliche isocyanatreaktive Funktionalität in den Seitengruppen aufweisen, mit einer Molmasse zwischen ca. 20.000 und 4.000.000 und mindestens zwei aktiven Wasserstoffatomen. Besonders bevorzugt werden Polyvinylbutyrale verwendet.
Die verwendeten Polyvinylbutyrale besitzen vorzugsweise ein Hydroxyläquivalent 1.500 bis 20.000 und eine Molmasse von ca. 20.000 und 100.000.
Isocyanatgruppenhaltige Oligomere und/oder Polymere sind bevorzugt Reaktionsprodukte, die aus Di- und/oder Polyisocyanaten oder einem Gemisch verschiedener Isocyanate mit einem oder mehreren Polyolen, von denen mindestens eines trifunktionell ist, bei Temperaturen von 40 bis 100°C, vorzugsweise 45 bis 85°C - ggf. in Gegenwart von Katalysatoren, Füllstoffen, Pigmenten und /oder Flammschutzmitteln - hergestellt werden. Bevorzugt verwendete Polyole sind ausgewählt aus Polyetheralkoholgemischen, Polyharnstoff-Dispersionspolyolen oder Gemischen von kristallisationsfähigen Polyetheralkoholen, Polyetheresteralkoholen und/oder Polyetheresteralkoholen. Als besonders geeignet haben sich Polyole erwiesen, die zusätzlich nanoskalige reaktive, aktive oder inerte Füllstoffe aufweisen.

Bevorzugt verwendete Reaktionsprodukte bzw. Vorpolymere aus Polyolen und Isocyanaten, weisen ein Verhältnis von Hydroxylgruppen zu den Isocyanatgruppen von 1 : 1,6 bis 1 : 5,5 auf, vorzugsweise zwischen 1 : 2 und 1 : 3,5.
Katalysatoren, Füllstoffe, Pigmente und/oder Flammschutzmittel können in die Polyole z.B. vor der Stufe der Vorpolymerherstellung mit Di- und/oder Polyisocyanaten eingearbeitet werden.

Das Vermischen der pulverisierten Komponenten und die Formgebung erfolgt bevorzugt bei Temperaturen von 80°C bis 180°C, besonders bevorzugt bei Temperaturen von 110°C bis 160°C.

Eine Verfahrensvariante ist dadurch gekennzeichnet, dass ein Gemisch aus einem Polyvinylbutyral mit dem Hydroxyläquivalent 1.500 bis 20.000 mit 3 bis 20 Gew.-% eines Prepolymeren mit 1 bis 15 Gew.-% Isocyanatendgruppen bei Temperaturen von 80 bis 180°C unter Formgebung zum erfindungsgemäßen Formgedächtnis-Polymer umgesetzt wird.
Besonders bevorzugt werden Polyvinylbutyrale mit dem Hydroxyläquivalent von 3.500 bis 15.000 mit vorzugsweise 3 bis 10 Gew.-% Prepolymeren umgesetzt, die 5 bis 10 Gew.-% Isocyanatendgruppen aufweisen.
Die Umsetzung kann unter Formgebung z.B. in einem Extruder, in einem Kneter oder in einer Spritzgussmaschine durchgeführt werden. So können z.B. die Gemische unter Formgebung zu expansionsfähigen Schläuchen extrudiert werden. Weiterhin können Shape Memory Polyurethane mit einem Expansionsgrad von 100 bis 600 % hergestellt werden. Durch Umsetzung in einer Spritzgussmaschine werden z.B. Formteile mit einer Shore-A-Härte von 45 bis 95 hergestellt.

In einer Ausführungsform der Erfindung werden Shape Memory Polymere durch Umsetzung von Polyvinylbutyral mit einem Reaktionsprodukt aus einem Polyetheralkoholgemisch und einem Überschuss an Di- und/oder Polyisocyanaten mit 1 bis 15 Gew.-% reaktiver Isocyanatgruppen in einem Gewichtsverhältnis von 99 : 1 bis 40 : 60 sowie ggf. weiteren Additiven wie Katalysatoren, Füllstoffen, Pigmenten und/oder Flammschutzmitteln umgesetzt und dadurch ein Shape Memory Polymer mit einem durch das Ausmaß der Umsetzung am Polyvinylbutyral bestimmten temperaturunabhängigen Plateaumodul in einem Temperaturbereich zwischen -20°C bis + 90°C, bevorzugt zwischen -10°C und +90°C erhalten.

In einer weiteren Ausführungsform der Erfindung werden Shape Memory Polymere durch Umsetzung von Polyvinylbutyral mit einem Reaktionsprodukt aus einem Polyharnstoff-Dispersionspolyol mit einem Überschuss an Di- und/oder Polyisocyanaten mit 1 bis 15 Gew.-% reaktiver Isocyanatgruppen hergestellt. Dazu wird zunächst ein Polyharnstoff-Dispersionspolyol mit Polyharnstoffteilchen mit einer Größe zwischen 20 und 900 nm durch Depolymerisation von Polyurethan-Weichschaumstoff mit einer Hydroxylzahl von 150 bis 400 mg KOH/g hergestellt. Dieses wird in einer zweiten Stufe mit dem 1,3- bis 10-fachen Überschuss an Isocyanatgruppen je Hydroxylgruppe bei einer Temperatur zwischen 40 und 100°C, vorzugsweise 45 bis 80°C, innerhalb von einer bis acht Stunden unter Rühren umgesetzt, wodurch ein isocyanatgruppenhaltiges Vorpolymerisat, das gemeinhin als Prepolymer bezeichnet wird, in Form einer Flüssigkeit oder eines Feststoffes erhalten wird. Dieses Prepolymer wird in fein vermahlener Form in der dritten Stufe mit Polyvinylbutyral einem Gewichtsverhältnis von 99 : 1 bis 40 : 60 in einem Kneter oder Extruder umgesetzt, so dass die erfindungsgemäßen Shape Memory Polymere erhalten werden.
In einer weiteren Ausführungsform der Erfindung werden Shape Memory Polymere durch Umsetzung von Polyvinylbutyral mit einem Reaktionsprodukt aus einem Gemisch von Polyetheralkoholen und ggf. Diolen mit einem Überschuss an Di- und/oder Polyisocyanaten mit 1 bis 15 Gew.-% reaktiver Isocyanatgruppen hergestellt. Vorzugsweise werden Polyetheratriole auf der Basis von Glycerin und Propylenoxid sowie ggf. Ethylenoxid mit Molmassen von 400 bis 7500 und Polyetherdiole auf der Basis von Propylenoxid ggf. mit 5 bis 35 Gew.-% Ethylenoxid und Molmassen von 1000 bis 4000 verwendet. Das Gemisch kann zusätzlich bis zu 20 Gew.-% Diole, z. B. Diethylenglykol, Dipropylenglykol, Tetraethylenglykol, Polyethylenglykol der Molmasse 400 bis 6000 oder Polypropylenglykole der Molmasse 200 bis 800 enthalten. Ein Gemisch aus mindestens zwei dieser Komponenten wird mit dem 1,5- bis 10-fachen Überschuss an Isocyanatgruppen je Hydroxylgruppe bei einer Temperatur zwischen 40 und 100°C, vorzugsweise 45 bis 80°C, innerhalb von einer bis acht Stunden unter Rühren umgesetzt, wodurch ein isocyanatgruppenhaltiges Vorpolymerisat, das gemeinhin als Prepolymer bezeichnet wird, in Form einer Flüssigkeit oder eines Feststoffes erhalten wird. Dieses Prepolymer wird in der dritten Stufe mit Polyvinylbutyral einem Gewichtsverhältnis von 99 : 1 bis 40 : 60 in einem Kneter oder Extruder bei Temperaturen von 75 bis 180°C, vorzugsweise 90 bis 130°C, umgesetzt, so dass die erfindungsgemäßen Shape Memory Polymere erhalten werden.
In einer weiteren Ausführungsform der Erfindung werden Shape Memory Polymere durch Umsetzung von Polyvinylbutyral mit einem Reaktionsprodukt aus einem Gemisch von kristallisationsfähigen Polyetheralkoholen, Polyetheresteralkoholen und/oder Polyetheresteralkoholen mit Molmassen von 1000 bis 4000 ggf. mit zusätzlich bis zu 20 Gew.-% Diole sowie Di- und/oder Polyisocyanaten in Form eines Prepolymeren hergestellt.

In einer weiteren Ausführungsform der Erfindung werden Shape Memory Polymere durch Umsetzung von isocyanatreaktive Gruppen aufweisenden thermoplastischen Polymeren mit isocyanatgruppenhaltigen Vorpolymerisaten während der Formgebung bei Temperaturen zwischen 80 und 180°C, vorzugsweise 90 bis 150°C, hergestellt.
In einer weiteren Ausführungsform der Erfindung werden Shape Memory Polymere durch eine der vorstehend beschriebenen Ausführungsformen dadurch hergestellt, dass in die Hydroxylverbindungen vor der Stufe der Prepolymerherstellung mit Di- und/oder Polyisocyanaten nanoskalige reaktive, aktive oder inerte Füllstoffe eingearbeitet werden. Solche nanoskaligen Füllstoffe können z. B. Metalle wie Aluminium, Silber, Kupfer oder Magnesium, Silikate oder Schichtsilikate wie Montmorrolinit oder Glimmer, Carbide wie Silizium- oder Borcarbid, Melaminderivate, Melamincyanurat, Oligo- oder Polyharnstoffe und/oder in situ hergestellte Silikate oder Siloxane sein.
Die Eigenschaften der erfindungsgemäßen Shape Memory Polymere werden durch das Verhältnis der Polyhydroxylverbindungen zu dem/den Di- und/oder Polyisocyanat/en einerseits und durch das Verhältnis von Prepolymerem zum thermoplastischen, isocyanatreaktiven Polymer bestimmt. Insbesondere werden die Eigenschaften durch die beiden Verhältnisse von Polyharnstoffdispersionspolyol zu Polyisocyanat im Prepolymeren und von Prepolymer zu Polyvinylbutyral bestimmt, wobei der Acetalisierungsgrad (bestimmt durch die noch verfügbaren Hydroxylgruppen) von untergeordneter Bedeutung ist, da die verfügbaren Hydroxylgruppen in aller Regel nicht vollständig umgesetzt werden.
Überraschend ist bei der erfindungsgemäßen Arbeitsweise bei Verwendung von nanoskaligen, aktiven Füllstoffen in den Polyhydroxylverbindungen, insbesondere bei den Polyharnstoffdispersionspolyolen, dass ohne eine nach dem Stand der Technik geforderte kristallisationsfähige weiche Domäne Polymere mit Shape Memory Effekt erhalten werden. Der Shape Memory Effekt der erfindungsgemäßen Polymere wird durch die Kombination einer schwachen Vernetzung und der Integration der nanoskaligen Oligo- oder Polyharnstoffteilchen erreicht. Die vergleichsweise geringe Vernetzungsdichte der erfindungsgemäßen Polymeren wird durch Umsetzung eines Teils der freien Hydroxylgruppen des Polyvinylbutyrals mit freien Isocyanatgruppen des Prepolymeren erreicht. Die nanoskaligen Oligo- oder Polyharnstoffteilchen bilden zunächst eine aus singulären Teilchen bestehende Phase, die bei Einwirkung von äußerer Kraft oder Energie eine kontinuierliche Phase bildet und dabei die Form fixiert. Dieser Prozess ist durch erneute Zuführung von äußerer Kraft oder Energie reversibel, wobei das Formmaterial aber immer seine Form erinnert und diese wieder einnimmt.

So werden erfindungsgemäß z.B. Polyharnstoffdispersionspolyole mit Hydroxylzahlen zwischen 150 und 400 mg KOH/g, das entspricht Hydroxyläquivalenten von 375 bis 140 g/Äquivalent, und einem Anteil von 0,2 bis 20 Gew.-% an nanoskaligen Oligo- oder Polyharnstoffen verwendet. Diese können durch Depolymerisation von Polyurethan-Weichschaumstoffen hergestellt werden. Als Polyurethan-Weichschaumstoffe kommen nur solche in Frage, bei deren Herstellung keine Polymerpolyole (Polyetheralkohole mit Styren- oder Styren-Acrylnitril-Copolyme-ren als Dispersion) verwendet wurden, d. h. Kaltformschaumstoffe (High Resiliency Foams), viskoelastische Schaumstoffe oder Blockweichschaumstoffe (slabstock foams) ohne solche Polymerpolyole, da ansonsten die im Mikrometerbereich liegenden Polymerteilchen die Wirkung der nanoskaligen Oligo- oder Polyharnstoffteilchen in unvorhersehbarer Weise verändern und ggf. den Shape Memory Effekt nicht zustande kommen lassen würde. Die durch das spezielle Depolymerisationsverfahren hergestellten Polyole zeichnen sich demzufolge durch eine Zusammensetzung aus, die auf anderem Wege nicht erreichbar ist, und in folgenden Grenzen liegt:

| | | |
|---|---|---|
| (1) | Polyetheralkohol (Molmasse 2000 bis 6000) | 50 bis 85 Gew.-% |
| (2) | kurzkettiger Polyetheralkohol (Molmasse 200 bis 800) | 0,5 bis 5 Gew.-% |
| (3) | kurzkettiges Diol (Molmasse 100 bis 300) | 0,5 bis 25 Gew.-% |
| (4) | Additive aus dem Weichschaumstoff | 0,2 bis 2 Gew.-% |
| (5) | nanoskalige Oligo- oder Polyharnstoffe | 0,2 bis 20 Gew.-%. |

Dabei werden die Menge der Bestandteile (2) und (4) bis (5) durch die Formulierung des Weichschaumstoffs und die Menge der Bestandteile (1) und (3) durch das Herstellungsverfahren bestimmt. Bevorzugt werden solche Polyharnstoffdispersionspolyole, in denen

| | | |
|---|---|---|
| (3) | kurzkettiges Diol/Diole (Molmasse 100 bis 300) | 15 bis 45 Gew.-% und |
| (5) | nanoskalige Oligo- oder Polyharnstoffe | 2 bis 15 Gew.-% |

enthalten sind. Bei einer solchen bevorzugten Zusammensetzung bilden sich diskrete Phasen nur in untergeordnetem Maße aus, vielmehr bildet sich eine Phase, in der die weichen und die harten Domänen in hohem Maße vermischt und die Molmassen zwischen den Vernetzungsstellen M_{c} über einen großen Bereich verteilt sind.
Gegenstand der Erfindung sind auch Formgedächtnis-Polymere hergestellt nach oben beschriebenen Verfahren.

Erfindungsgemäße Formgedächtnis-Polymere besitzen eine schwach vernetzte Polymerstruktur mit einer breiten Verteilung der Netzkettenabstände und einem temperaturunabhängigen Plateaumodul im Bereich von mindestens 10 K zwischen -20°C und +90°C.

Sie sind z.B. aufgebaut aus
- einem durch Polymerisation aus einer ethylenisch ungesättigten Verbindung hervorgegangenen Polymeren mit zusätzlicher Funktionalität in den Seitengruppen mit einer Molmasse zwischen ca. 20.000 und 4.000.000 und mindestens zwei aktiven Wasserstoffatomen, und
- einem isocyanatgruppenhaltigen Prepolymeren aus einem nanoskalige Oligo- und/oder Polyharnstoffe enthaltenden Gemisch von Polyetheralkoholen und Diolen sowie weiteren Additiven, die aus der Depolymerisation von Polyurethan-Weichschaumstoffen herrühren, und mindestens einem Di- oder Polyisocyanat oder Gemischen davon mit einem Isocyanatgehalt von 1,5 bis 20% und einem Schmelzpunkt zwischen -10°C und +85°C.

Vorzugsweise sind es weiterhin Formgedächtnis-Polymere, die aufgebaut sind aus
- einem Polyvinylbutyral der Molmasse 100.000 bis 2.500.000 mit 2 bis 1000 freien Hydroxylgruppen im Molekül sowie
- durch Umsetzung mit diesem aus einem isocyanatgruppenhaltigen Prepolymeren entstandenen Urethanbrücken, die aus einer oder mehreren Polyetherketten und mindestens einer Diolkette sowie an diesen angelagerten Oligo- oder Polyharnstoff ketten bestehen.

Erfindungsgemäße Formgedächtnis-Polymere können außerdem aufgebaut sein aus
- einem Polyvinylbutyral der Molmasse 100.000 bis 2.500.000 mit einem Hydroxyläquivalent zwischen 1.500 und 20.000 g/Äquivalent sowie
- Urethanbrücken über 5 bis 95 % der verfügbaren Hydroxylgruppen mit Spacerketten mit einer Molmasse von 200 bis 20.000, die aus dem Isocyanatrest und mindestens einer Diol- und/oder Polyetherkette bestehen.

Mittels der dynamisch-mechanischen Analyse kann für die erfindungsgemäßen Polymere nachgewiesen werden, dass ein breites Verlustmodulgebiet zwischen ca. -20°C und +90°C mit einem relativ konstanten, hohen Verlustmodul vorliegt. Durch die durch den Modulverlauf wiedergegebene Struktur werden die besonderen Eigenschaften der erfindungsgemäßen Polymere erzielt.
Durch die oben beschriebene Struktur der Polymere haben diese besondere Eigenschaften. Eine dieser Eigenschaften ist, dass die Erweichung des ansonsten festen Polymeren langsam und über einen großen Temperaturbereich und danach fast sprunghaft erfolgt. Dadurch ist es möglich, in diesen Polymeren ein Formgedächtnis zu erzeugen, was bedeutet, dass die Polymere nach ihrer Herstellung eine bestimmte Form annehmen und diese behalten, bis von außen Energie einwirkt. Diese Energie kann Wärme, Energie oder eine Kraft sein. Durch den gezielten Einsatz von Energie wird der Bereich im Modul verschoben, so dass sich die geometrische Form des Polymeren verändert. Sobald diese Energie zurückgefahren oder keine weitere Energie hinzugefügt wird, nimmt der Stoff wieder seine ursprüngliche Form an.
Die Umsetzung kann wie bereits ausgeführt unter Formgebung in einem Extruder, in einem Kneter oder in einer Spritzgussmaschine erfolgen.
So können z. B. Schläuche aus den Polymeren bei einer Temperatur oberhalb des sprunghaften Anfalls des Verlustmoduls extrudiert werden. Diese sind bei der Temperatur des im wesentlichen konstanten Verlustmoduls unverändert handhabbar. Bei einer Energiezufuhr, z. B. durch Wärme, geht das Material in den elastischen Zustand über und kann in seiner Form verändert werden. Diese Veränderung kann in einfachem Biegen oder Rollen bestehen, kann aber auch eine Expansion des Schlauches sein. Beim Abkühlen behält das Material diese neue Form. Bei erneuter Energiezufuhr, die jedoch oberhalb der zur Strukturveränderung erforderlichen liegen sollte, nimmt das Formteil seine ursprüngliche Form wieder an, d. h. es bildet sich der ursprüngliche Schlauch zurück.
Die reversible Formveränderung der erfindungsgemäßen Polymere kann außer in einer Dehnung oder in einer Biegung in einer Kompression oder in einer Auswalzung bestehen. Bei Anwendung des Verfahrens einer Energiezufuhr über einen bestimmten Punkt hinaus, das kann eine Erhöhung der Temperatur, ein Impuls oder eine hohe Spannung und Dehnung sein, kann eine reversible Formveränderung erzielt werden. Wird jedoch die Energiemenge über einen durch die Verlustmodulkurve definierten Bereich hinaus gesteigert, so kann auch eine irreversible Formveränderung eintreten, zumal dann, wenn Bindungen mechanisch oder thermisch zerstört werden.
Wie aus diesen Darlegungen ersichtlich, ist der Bereich der Einsatztemperatur durch die Basismaterialien vorgegeben und liegt zwischen -20 und +90°C. Die erfindungsgemäß wesentliche Komponente ist das Reaktionsprodukt bzw. Prepolymer, das aus einer oder mehreren Polyhydroxylverbindungen mit speziellen Eigenschaften, z. B. einer in bestimmten Strukturelementen verfügbaren Kristallisationsfähigkeit oder im Einsatz von nanoskaligen aktiven Füllstoffen sowie Di- und /oder Polyisocyanaten mit einem vergleichsweise niedrigen Isocyanat:Hydroxyl-Verhältnis hergestellt wird. Eine Besonderheit liegt in der Verwendung von nanoskaligen Polyharnstoffdispersionspolyolen, die über die sich bildende diskontinuierliche Phase der Polyharnstoffe angeregt werden können, eine kontinuierliche Phase zu bilden. Demzufolge ist eine weitere erfindungsgemäß wesentliche Komponente das Prepolymer, das aus nanoskaligen Polyharnstoffdispersionspolyolen und Di- und/oder Polyisocyanaten hergestellt wird.
Die Herstellung der erfindungsgemäß verwendeten Prepolymeren erfolgt z.B. dadurch, dass in ein Di- und/oder Polyisocyanat oder ein Gemisch verschiedener Isocyanate bei einer Temperatur zwischen 45 und 85°C eine berechnete Menge des Gemisches der Polyhydroxylverbindungen bzw. an Polyharnstoffdispersionspolyol unter Rühren eingetragen wird. Die eingesetzte Menge an Polyol bestimmt den Isocyanatgehalt und damit bei der Herstellung der erfindungsgemäßen Polymere den Vernetzungsgrad und die mittlere Molmasse zwischen den Vernetzungsstellen M_{c}. Üblicherweise werden die Prepolymere mit einem Verhältnis der Hydroxylgruppen zu den Isocyanatgruppen von 1 : 1,6 bis 1 : 5,5, bevorzugt zwischen 1 : 2 und 1 : 3,5 hergestellt. Dabei wird die katalytische Wirkung der aus den Weichschaumstoffen resultierenden Katalysatoren genutzt, so dass die Prepolymere bei größeren Mengen ohne Energiezufuhr hergestellt werden können. Ansonsten erfolgt die Herstellung in Rührreaktoren und einem Ablassen auf vorbereitete Bänder oder Platten. Es können zur Steuerung der Umsetzung bei der Prepolymerbildung weitere Additive, z. B. weitere Katalysatoren, die in der Polyurethanchemie bekannt sind, vorzugsweise tertiäre Amine und besonders bevorzugt Triethylendiamin, oder Reaktionsverzögerer, vorzugsweise Acetylaceton, zugegeben werden.
Die Herstellung der erfindungsgemäßen Shape Memory Polymere erfolgt z. B. durch Vermischen der pulversierten Ausgangsstoffe und Kneten des Gemisches bei Temperaturen zwischen 80 und 180°C in einer Zeit von 2 Minuten bis zu 1 Stunde. Während des Knetens erfolgt die Umsetzung zu den erfindungsgemäßen Polymeren. In einer weiteren Ausführungsform wird das pulverförmige Gemisch in einen Extruder bzw. Reaktionsextruder gegeben und bei einer Temperatur zwischen 120 und 180°C mit einer Verweilzeit von 20 Sekunden bis 15 Minuten extrudiert. In einer dritten Ausführungsform wird das pulverförmige Gemisch zunächst im Kneter homogenisiert und anschließend extrudiert. In einer vierten Ausführungsform wird das pulverförmige Gemisch durch Spritzguss in spezielle Werkzeuge verspritzt, deren Temperaturgradient so programmiert ist, dass die gewünschte Struktur in höchst möglicher Weise erreicht wird. In einer fünften Ausführungsform wird das thermoplastische isocyanatreaktive Material in einem Kneter oder Extruder aufgeschmolzen und das flüssige bzw. geschmolzene Prepolymer zudosiert und ein Formteil erzeugt.
Die Anwendung der erfindungsgemäßen Shape Memory Polymere erfolgt z. B. in der Elektrotechnik und in der Medizintechnik. In der Elektrotechnik können die Polymeren z. B. als Isolationsmaterialien oder als Schrumpfschläuche verwendet werden. Weiterhin können diese Materialien als Verschlussmaterialien für Kabeldurchführungen, z. B. in Mauerwerk oder in Buchsen oder bei Kabelbündeln eingesetzt werden, wobei hier ihre Fähigkeit, auf Impuls ihre Eigenschaften zu verändern, genutzt wird. Ein weiteres Einsatzgebiet sind mikromechanische Geräte zum Einsatz in der Medizin. In der Medizintechnik lassen sich durch Temperatureinwirkung unterschiedliche Härtegrade oder Elastizitäten einstellen, die z. B. im Rettungswesen zu einer verbesserten Stabilisierung von Unfallopfern genutzt werden können.
Im folgenden wird die Erfindung durch Beispiele erläutert, ohne dadurch den Schutzumfang begrenzen zu wollen.

### Beispiele

### Beispiel 1

a) Herstellung des Polyharnstoffdispersionspolyols In einen 12,5 I Edelstahlreaktor mit Rührer, Dosierungen für Flüssigkeiten und Feststoffe, Stickstoffeinleitung und Wärmetauscher werden 1,0 kg Diethylenglykol, 2,2 kg Dipropylenglykol, 0,45 kg N-Methyl-dipropylentriamin und 0,05 kg Di-n-butylamin eingewogen und dieses Gemisch unter Rühren auf 170°C erwärmt. Innerhalb von 95 Minuten werden 6,35 kg Polyurethan-Kaltformschaum in Flocken zugegeben. Nach beendeter Zugabe wird das Gemisch auf 200°C erwärmt. Nach 15 Minuten werden 0,56 kg eines Polyethertriols der Molmasse 4800 g/Mol zugegeben. Die Umsetzung wird nach weiteren 15 Minuten beendet. Das Reaktionsgemisch wird mittels eines Bodenventils abgelassen und weist eine Hydroxylzahl von 302 mg KOH/g, eine Aminzahl von 26 mg KOH/g, eine Viskosität von 5170 mPas (25°C) auf.
b) Herstellung eines Prepolymeren In einen 100l-Edelstahl-Reaktor mit Rührer, Heiz- und Kühlvorrichtung, Stickstoffeinleitung und Bodenablass werden 64,1 kg polymeres 4,4'-Diphenylmethandiisocyanat gegeben und dieses auf 45°C erwärmt. Unter Rühren werden 33,3 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 2 Stunden in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 6,65 % und einem Schmelzbereich von 56 bis 78°C (DSC) erhalten.
c) Herstellung des erfindungsgemäßen Shape Memory Polymeren 2,5 kg Polyvinylbutyral mit einem Hydroxyläquivalent von 3700 g/Äquivalent werden mittels einer Stiftmühle feinst pulverisiert (Teilchengröße 0,01 bis 0,1 mm). Ebenso werden 256 g des unter b) hergestellten Prepolymeren feinst pulverisiert. Die Pulver werden in einem Tumbler 1,5 Stunden innig vermischt und dabei ein leichter Stickstoffschleier angewandt. Das Gemisch wird in einen Kneter gegeben und 15 Minuten bei 120°C geknetet. Man erhält ein Shape Memory Polyurethan. Wie daraus ersichtlich, liegt der Glasübergang zwischen -5°C und +65°C, so dass in diesem Bereich der Verlustmodul nahezu konstant ist und das Polymer ein Formgedächtnis aufweist.

### Beispiel 2

a) Herstellung des Polyharnstoffdispersionspolyols Wie in Beispiel 1 werden in einen 25 I Edelstahlreaktor mit Rührer, Dosierungen für Flüssigkeiten und Feststoffe, Stickstoffeinleitung und Wärmetauscher 1,7 kg Diethylenglykol, 3,2 kg Dipropylenglykol, 0,75 kg N-Methyl-dipropylentriamin und 0,25 kg Di-n-butylamin eingewogen und dieses Gemisch unter Rühren auf 170°C erwärmt. Innerhalb von 120 Minuten werden 15 kg Polyurethan-Kaltformschaum in Flocken zugegeben. Nach beendeter Zugabe wird das Gemisch auf 200°C erwärmt. Nach 15 Minuten werden 1,5 kg eines Polyethertriols der Molmasse 4200 g/Mol (OH-Zahl 42 mg KOH/g) zugegeben. Die Umsetzung wird nach weiteren 15 Minuten beendet. Das Reaktionsgemisch wird mittels eines Bodenventils abgelassen und weist eine Hydroxylzahl von 276 mg KOH/g, eine Aminzahl von 34 mg KOH/g, eine Viskosität von 7760 mPas (25°C) auf.
b) Herstellung eines Prepolymeren In einen 100I-Edelstahl-Reaktor mit Rührer, Heiz- und Kühlvorrichtung, Stickstoffeinleitung und Bodenablass werden 55,8 kg polymeres 4,4'-Diphenylmethandiisocyanat gegeben und dieses auf 45°C erwärmt. Unter Rühren werden 36,5 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 2,5 Stunden in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 4,85 % und einem Schmelzbereich von 61 bis 82°C (DSC) erhalten.
c) Herstellung des erfindungsgemäßen Shape Memory Polymeren 4,5 kg Polyvinylbutyral mit einem Hydroxyläquivalent von 4750 g/Äquivalent werden mittels einer Stiftmühle pulverisiert (Teilchengröße 0,01 bis 0,1 mm). Ebenso werden 400 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 120°C mit einer Verweilzeit von 5 Minuten durch eine 6mm-Runddüse extrudiert. Man erhält ein Shape Memory Polyurethan in Form eines 6mm-Drahtes. Wie daraus ersichtlich, liegt der Glasübergang zwischen -1°C und +67°C, so dass in diesem Bereich der Verlustmodul nahezu konstant ist und das Polymer ein Formgedächtnis aufweist. Das Material kann durch Erwärmen auf 45 - 50°C verformt werden, nimmt jedoch beim Abkühlen wieder seine ursprüngliche Form an.

### Beispiel 3

a) Herstellung des Polyharnstoffdispersionspolyols Wie in Beispiel 1 werden in einen 25 I Edelstahlreaktor mit Rührer, Dosierungen für Flüssigkeiten und Feststoffe, Stickstoffeinleitung und Wärmetauscher 1,5 kg Diethylenglykol, 3,5 kg Dipropylenglykol, 0,70 kg N-Methyl-dipropylentriamin und 0,20 kg Di-n-butylamin eingewogen und dieses Gemisch unter Rühren auf 170°C erwärmt. Innerhalb von 120 Minuten werden 15 kg Polyurethan-Kaltformschaum in Flocken zugegeben. Nach beendeter Zugabe wird das Gemisch auf 200°C erwärmt. Nach 15 Minuten werden 2,5 kg eines Polyethertriols der Molmasse 3300 g/Mol (OH-Zahl 55 mg KOH/g) zugegeben. Die Umsetzung wird nach weiteren 15 Minuten bei 200°C beendet. Das Reaktionsgemisch wird mittels eines Bodenventils abgelassen und weist eine Hydroxylzahl von 285 mg KOH/g, eine Aminzahl von 30 mg KOH/g, eine Viskosität von 6750 mPas (25°C) auf.
b) Herstellung eines Prepolymeren In einen 100I-Edelstahl-Reaktor mit Rührer, Heiz- und Kühlvorrichtung, Stickstoffeinleitung und Bodenablass werden 59,5 kg 4,4'-Diphenylmethandiisocyanat gegeben und dieses auf 48°C erwärmt. Unter Rühren werden 33,5 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 3 Stunden in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 8,15 % und einem Schmelzbereich von 54 bis 72°C (DSC) erhalten.
c) Herstellung des erfindungsgemäßen Shape Memory Polymeren 4,5 kg Polyvinylbutyral mit einem Hydroxyläquivalent von 3120 g/Äquivalent werden mittels einer Stiftmühle pulverisiert (Teilchengröße 0,01 bis 0,1 mm). Ebenso werden 440 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 120°C mit einer Verweilzeit von 5 Minuten durch eine 6mm-Runddüse mit zentralem Dorn von 2 mm extrudiert. Man erhält ein Shape Memory Polyurethan in Form eines 6mm-Schlauches. Wie daraus ersichtlich, liegt der Glasübergang zwischen -4°C und +59°C, so dass in diesem Bereich der Verlustmodul nahezu konstant ist und das Polymer ein Formgedächtnis aufweist. Das Material kann durch Erwärmen auf 95 - 100°C durch Druckluft derart verformt werden, dass ein Schlauchdurchmesser von 14 mm erreicht wird. Dieser bleibt nach Abkühlen bestehen. Bei erneutem Erwärmen zieht sich der Schlauch wieder auf seinen ursprünglichen Durchmesser von 6 mm zurück.

### Beispiel 4

a) Herstellung des Polyharnstoffdispersionspolyols Wie in Beispiel 1 werden in einen 125 I Edelstahlreaktor mit Rührer, Dosierungen für Flüssigkeiten und Feststoffe, Stickstoffeinleitung und Wärmetauscher 10,85 kg Diethylenglykol, 20,15 kg Dipropylenglykol, 4,70 kg N-Methyl-dipropylentriamin und 0,80 kg Di-n-butylamin eingewogen und dieses Gemisch unter Rühren auf 190°C erwärmt. Innerhalb von 120 Minuten werden 65 kg Polyurethan-Kaltformschaum in Flocken zugegeben. Nach beendeter Zugabe wird das Gemisch auf 220°C erwärmt. Die Umsetzung wird nach weiteren 45 Minuten bei 220°C beendet. Das Reaktionsgemisch wird mittels eines Bodenventils abgelassen und weist eine Hydroxylzahl von 299 mg KOH/g, eine Aminzahl von 33 mg KOH/g und eine Viskosität von 3810 mPas (25°C) auf.
b) Herstellung eines Prepolymeren In einen 100I-Edelstahl-Reaktor mit Rührer, Heiz- und Kühlvorrichtung, Stickstoffeinleitung und Bodenablass werden 68,5 kg polymeres 4,4'-Diphenylmethandiisocyanat gegeben und dieses auf 68°C erwärmt. Unter Rühren werden 32,0 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 60 Minuten in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 12,8 % und einem Schmelzbereich von 48 bis 79°C (DSC) erhalten.
c) Herstellung des erfindungsgemäßen Shape Memory Polymeren 4,5 kg Polyvinylbutyral mit einem Hydroxyläquivalent von 4065 g/Äquivalent werden mittels einer Stiftmühle pulverisiert (Teilchengröße 0,01 bis 0,1 mm). Ebenso werden 310 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 130°C mit einer Verweilzeit von 5 Minuten durch eine 6mm-Runddüse mit zentralem Dorn von 2 mm extrudiert. Man erhält ein Shape Memory Polyurethan in Form eines 6mm-Schlauches. Der Glasübergang liegt zwischen 2°C und +63°C, so dass in diesem Bereich der Verlustmodul nahezu konstant ist und das Polymer ein Formgedächtnis aufweist. Das Material kann durch Erwärmen auf 90 - 100°C durch Druckluft derart verformt werden, dass ein Schlauchdurchmesser von 13 mm erreicht wird. Dieser bleibt nach Abkühlen bestehen. Bei erneutem Erwärmen zieht sich der Schlauch wieder auf seinen ursprünglichen Durchmesser von 6 mm zurück.

### Beispiel 5

a) Herstellung des Polyharnstoffdispersionspolyols Wie in Beispiel 1 werden in einen 25 l Edelstahlreakto mit Rührer, Dosierungen für Flüssigkeiten und Feststoffe, Stickstoffeinleitung und Wärmetauscher 1,8 kg Diethylenglykol, 4,4 kg Dipropylenglykol, 0,95 kg N-Methyl-dipropylentriamin und 0,15 kg Di-n-butylamin eingewogen und dieses Gemisch unter Rühren auf 170°C erwärmt. Innerhalb von 40 Minuten werden 12,8 kg Polyurethan-Kaltformschaum in Flocken zugegeben. Nach beendeter Zugabe wird das Gemisch auf 220°C erwärmt. Die Umsetzung wird nach weiteren 30 Minuten bei 220°C beendet. Das Reaktionsgemisch wird mittels eines Bodenventils abgelassen und weist eine Hydroxylzahl von 298 mg KOH/g, eine Aminzahl von 31 mg KOH/g, eine Viskosität von 3950 mPas (25°C) auf.
b) Herstellung eines Prepolymeren In einen 125 I-Edelstahl-Reaktor mit Rührer, Heiz- und Kühlvorrichtung, Stickstoffeinleitung und Bodenablass werden 68,5 kg polymeres 4,4'-Diphenylmethandiisocyanat gegeben und dieses auf 60°C erwärmt. Unter Rühren werden 34,5 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 1 Stunde in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 8,5 % und einem Schmelzbereich von 45 bis 63°C (DSC) erhalten.
c) Herstellung des erfindungsgemäßen Shape Memory Polymeren 4,5 kg Polyvinylbutyral mit einem Hydroxyläquivalent von 2160 g/Äquivalent werden mittels einer Stiftmühle pulverisiert (Teilchengröße 0,01 bis 0,1 mm). Ebenso werden 230 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 120°C mit einer Verweilzeit von 5 Minuten durch eine 6mm-Runddüse mit zentralem Dorn von 2 mm extrudiert. Man erhält ein Shape Memory Polyurethan in Form eines 6mm-Schlauches. Der Glasübergangsbereich liegt zwischen 4°C und +63°C, so dass in diesem Bereich der Verlustmodul nahezu konstant ist und das Polymer ein Formgedächtnis aufweist. Das Material kann durch Erwärmen auf ca. 100°C durch Druckluft derart verformt werden, dass ein Schlauchdurchmesser von 14 mm erreicht wird. Dieser bleibt nach Abkühlen bestehen. Bei erneutem Erwärmen zieht sich der Schlauch wieder auf seinen ursprünglichen Durchmesser von 6 mm zurück. Das Shape Memory Polymer hat eine Shore-A-Härte von 81.

### Beispiel 6

a) Herstellung des Polyharnstoffdispersionspolyols Wie in Beispiel 1 werden in einen 125 I Edelstahlreaktor mit Rührer, Dosierungen für Flüssigkeiten und Feststoffe, Stickstoffeinleitung und Wärmetauscher 9,2 kg Diethylenglykol, 20 kg Dipropylenglykol, 4,5 kg N-Methyl-dipropylentriamin und 0,7 kg Di-n-butylamin eingewogen und dieses Gemisch unter Rühren auf 180°C erwärmt. Innerhalb von 70 Minuten werden 65,6 kg Polyurethan-Kaltformschaum in Flocken zugegeben. Nach beendeter Zugabe wird das Gemisch auf 210°C erwärmt. Die Umsetzung wird nach weiteren 30 Minuten bei 210°C beendet, und es werden anschließend während der Abkühlungsphase 30 kg Polypropylenglykol 2000 zugegeben. Das Reaktionsgemisch wird mittels eines Bodenventils abgelassen und weist eine Hydroxylzahl von 237 mg KOH/g, eine Aminzahl von 28 mg KOH/g, eine Viskosität von 3470 mPas (25°C) auf.
b) Herstellung eines Prepolymeren In einen 12,5 I-Edelstahl-Reaktor mit Rührer, Heiz- und Kühlvorrichtung, Stickstoffeinleitung und Bodenablass werden 6,05 kg polymeres 4,4'-Diphenylmethandiisocyanat gegeben und dieses auf 45°C erwärmt. Unter Rühren werden 3,95 kg des Polyharnstoffdispersionspolyols nach a) derart zugegeben, dass die Temperatur 80°C nicht übersteigt. Die Zugabe nimmt etwa 1 Stunde in Anspruch. Nach beendeter Zugabe wird die Temperatur noch zehn Minuten bei 80°C gehalten und danach über den Bodenablass in PTFE-beschichtete flache Wannen abgelassen. Es wird ein Prepolymeres mit einem Isocyanatgehalt von 8,03 % und einem Schmelzbereich von 52 bis 82°C (DSC) erhalten.
c) Herstellung des erfindungsgemäßen Shape Memory Polymeren 4,5 kg Polyvinylbutyral mit einem Hydroxyläquivalent von 2635 g/Äquivalent werden mittels einer Stiftmühle pulverisiert (Teilchengröße 0,01 bis 0,1 mm). Ebenso werden 523 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Spritzgussmaschine mit 350 kg Schließkraft gegeben und bei 140°C in Rundformen von 20 cm Durchmesser mit einer Wandstärke von 2 bis 8 mm verspritzt. Man erhält ein Shape Memory Polyurethan in Form eines Ringes. Der Glasübergangsbereich liegt zwischen 8°C und +66°C, so dass in diesem Bereich der Verlustmodul nahezu konstant ist und das Polymer ein Formgedächtnis aufweist. Das Material kann durch Erwärmen auf ca. 100°C verformt werden, so dass der Ring in ein Oval gepresst wird. Dieses bleibt nach Abkühlen bestehen. Bei erneutem Erwärmen wird der Ring in seiner ursprünglichen Gestalt zurückgebildet. Das Shape Memory Polymer hat eine Shore-A-Härte von 87.
Beispiel 7
a) Herstellung des Polyharnstoffdispersionspolyols Wie in Beispiel 1 werden in einen 125 I Edelstahlreaktor mit Rührer, Dosierungen für Flüssigkeiten und Feststoffe, Stickstoffeinleitung und Wärmetauscher 12,2 kg Diethylenglykol, 16,1 kg Dipropylenglykol, 4,50 kg N-Methyl-dipropylentriamin und 0,80 kg Di-n-butylamin eingewogen und dieses Gemisch unter Rühren auf 180°C erwärmt. Innerhalb von 100 Minuten werden 68 kg Polyurethan-Kaltformschaum in Flocken zugegeben. Nach beendeter Zugabe wird das Gemisch 15 Minuten auf 220°C erwärmt. Danach werden 11,1 kg Polypropylenglykol 2000 zugegeben und weiter bei 220°C gerührt. Die Umsetzung wird nach 25 Minuten bei 220°C beendet. Das Reaktionsgemisch wird mittels eines Bodenventils abgelassen und weist eine Hydroxylzahl von 256 mg KOH/g, eine Aminzahl von 30 mg KOH/g und eine Viskosität von 4120 mPas (25°C) auf.
b) Herstellung eines Prepolymeren In einen 100I-Edelstahl-Reaktor mit Rührer, Heiz- und Kühlvorrichtung, Stickstoffeinleitung und Bodenablass werden 61,1 kg polymeres 4,4'-Diphenylmethandiisocyanat gegeben und dieses auf 63°C erwärmt. Unter Rühren werden 40,7 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 90 Minuten in Anspruch. Nach beendeter Zugabe wird über den Bodenablass in PTFE-beschichtete flache Wannen abgelassen. Es wird ein Prepolymeres mit einem Isocyanatgehalt von 4,6 % und einem Schmelzbereich von 56 bis 85°C (DSC) erhalten.
c) Herstellung des erfindungsgemäßen Shape Memory Polymeren 4,5 kg Polyvinylbutyral mit einem Hydroxyläquivalent von 12.200 g/Äquivalent werden mittels einer Stiftmühle pulverisiert (Teilchengröße 0,01 bis 0,1 mm). Ebenso werden 515 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 135°C mit einer Verweilzeit von 4 Minuten durch eine 6mm-Runddüse mit zentralem Dorn von 2 mm extrudiert. Man erhält ein Shape Memory Polyurethan in Form eines 6mm-Schlauches. Der Glasübergang liegt zwischen -6°C und +54°C, so dass in diesem Bereich der Verlustmodul nahezu konstant ist und das Polymer ein Formgedächtnis aufweist. Das Material kann durch Erwärmen auf 90 - 100°C durch Druckluft derart verformt werden, dass ein Schlauchdurchmesser von 19 mm erreicht wird. Dieser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 62.

### Beispiel 8

a) Herstellung des Polyharnstoffdispersionspolyols Wie in Beispiel 1 werden in einen 125 I Edelsiahlreaktor mit Rührer, Dosierungen für Flüssigkeiten und Feststoffe, Stickstoffeinleitung und Wärmetauscher 14,1 kg Diethylenglykol, 15,5 kg Dipropylenglykol, 4,60 kg N-Methyl-dipropylentriamin und 0,85 kg Di-n-butylamin eingewogen und dieses Gemisch unter Rühren auf 180°C erwärmt. Innerhalb von 110 Minuten werden 69 kg Polyurethan-Kaltformschaum in Flocken zugegeben. Nach beendeter Zugabe wird das Gemisch 15 Minuten auf 220°C erwärmt. Danach werden 14,5 kg Polypropylenglykol 2000 zugegeben und weiter bei 220°C gerührt. Die Umsetzung wird nach 30 Minuten bei 220°C beendet. Das Reaktionsgemisch wird mittels eines Bodenventils abgelassen und weist eine Hydroxylzahl von 232 mg KOH/g, eine Aminzahl von 28 mg KOH/g und eine Viskosität von 4220 mPas (25°C) auf.
b) Herstellung eines Prepolymeren In einen 100I-Edelstahl-Reaktor mit Rührer, Heiz- und Kühlvorrichtung, Stickstoffeinleitung und Bodenablass werden 55,5 kg polymeres 4,4'-Diphenylmethandiisocyanat gegeben und dieses auf 60°C erwärmt. Unter Rühren werden 43,6 kg des Polyharnstoffdispersionspolyols nach a) derart zugegeben, dass die Temperatur 80°C nicht übersteigt. Im Falle, dass die Temperatur 80°C erreicht, wird die Kühlung zugeschaltet. Die Zugabe nimmt etwa 60 Minuten in Anspruch. Nach beendeter Zugabe wird über den Bodenablass in PTFE-beschichtete flache Wannen abgelassen. Es wird ein Prepolymeres mit einem Isocyanatgehalt von 3,5 % und einem Schmelzbereich von 58 bis 88°C (DSC) erhalten.
c) Herstellung des erfindungsgemäßen Shape Memory Polymeren 4,5 kg Polyvinylbutyral mit einem Hydroxyläquivalent von 12.200 g/Äquivalent werden mittels einer Stiftmühle pulverisiert (Teilchengröße 0,01 bis 0,1 mm). Ebenso werden 535 g des unter b) hergestellten Prepolymeren pulverisiert. Die Pulver werden in einem Tumbler 1,5 Stunden innig vermischt und dabei ein leichter Stickstoffschleier angewandt. Das Gemisch wird in einen Extruder gegeben und bei 135°C mit einer Verweilzeit von 6 Minuten durch eine 6mm-Runddüse mit zentralem Dorn von 2 mm extrudiert. Man erhält ein Shape Memory Polyurethan in Form eines 6mm-Schlauches. Der Glasübergang liegt zwischen -16°C und +45°C, so dass in diesem Bereich der Verlustmodul nahezu konstant ist und das Polymer ein Formgedächtnis aufweist. Das Material kann durch Erwärmen auf 90 - 100°C durch Druckluft derart verformt werden, dass ein Schlauchdurchmesser von 24 mm erreicht wird. Dieser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 55.

### Beispiel 9

a) Herstellung der Polyhydroxylkomponente In einen 100 I Rührkessel werden nacheinander unter einem Stickstoff-Schleier gegeben: 22,7 kg Polypropylenglykol 2000 und 6,8 kg Diethylenglykol. Das Gemisch wird auf 65°C unter Rühren erwärmt und 45 kg Polyethylenglykol 6000 zugegeben. Nach Homogenisierung werden 285 g Triethylendiamin zugegeben. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 32 kg rein-MDI gegeben und bei Erwärmung auf 50°C aufgeschmolzen. In die Schmelze wird die Polyhydroxylkomponente (a) mit einer solchen Geschwindigkeit dosiert, dass die Temperatur des Reaktionsgemisches 85°C nicht übersteigt. Die Zugabe ist nach zwei Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 6,04 % erhalten, das pastös ist und bei einer Temperatur von 45°C vollständig aufgeschmolzen ist.
c) Herstellung des erfindungsgemäßen Shape Memory Polymeren 4,5 kg Polyvinylbutyral mit einem Hydroxyläquivalent von 12.200 g/Äquivalent werden mittels einer Stiftmühle pulverisiert (Teilchengröße 0,01 bis 0,1 mm). Das Pulver wird in einen Einschneckenextruder gegeben und bei 135°C aufgeschmolzen. In die Zuführungsöffnung des Extruders werden 545 g des Prepolymeren von (b) derart zugegeben, dass die Verweilzeit 4 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen -6°C und +52°C mit einem Schmelzpunkt (DSC) bei 67°C. Der Verlustmodul nach DMA ist im Bereich zwischen -3°C und 45°C nahezu konstant. Das Polymer weist ein Formgedächtnis weist. Das Material kann durch Erwärmen auf 90 - 100°C durch Druckluft derart verformt werden, dass ein Schlauchdurchmesser von 24 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 65.

### Beispiel 9a

a) Herstellung der Polyhydroxylkomponente In einen 100 I Rührkessel werden nacheinander unter einem Stickstoff-Schleier gegeben: 8,2 kg Polypropylenglykol 2000, 48,7 kg des PHD-Polyols von Beispiel 1a und 1,8 kg Diethylenglykol. Das Gemisch wird auf 65°C unter Rühren erwärmt und 15 kg Polyethylenglykol 6000 zugegeben. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 88 kg rein-MDI gegeben und durch Erwärmung auf 50°C aufgeschmolzen. In die Schmelze wird die Polyhydroxylkomponente (a) mit einer solchen Geschwindigkeit dosiert, dass die Temperatur des Reaktionsgemisches 85°C nicht übersteigt. Die Zugabe ist nach zwei Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 9,7 % erhalten, das hart-elastisch und bei einer Temperatur von 49°C vollständig aufgeschmolzen ist. Das Prepolymer wird in einer Kryomühle auf eine Teilchengröße von 0,25 bis 1,5 mm vermahlen.
c) Herstellung des erfindungsgemäßen Shape Memory Polymeren 4,5 kg Polyvinylbutyral mit einem Hydroxyläquivalent von 12.200 g/Äquivalent werden mittels einer Stiftmühle pulverisiert (Teilchengröße 0,01 bis 0,1 mm). Das Pulver wird in einen Einschneckenextruder gegeben und bei 135°C aufgeschmolzen. In die Zuführungsöffnung des Extruders werden 2,5 kg des Prepolymeren von (b) derart zugegeben, dass die Verweilzeit 4 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen +4°C und +55°C mit einem Schmelzpunkt (DSC) bei 78°C. Der Verlustmodul nach DMA ist im Bereich zwischen 0°C und 60°C nahezu konstant. Das Polymer weist ein Formgedächtnis weist. Das Material kann durch Erwärmen auf 110 - 123°C durch Druckluft derart verformt werden, dass ein Schlauchdurchmesser von 24 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 78.

### Beispiel 10

a) Herstellung der Polyhydroxylkomponente In einen 100 I Rührkessel werden nacheinander unter einem Stickstoff-Schleier gegeben: 25,5 kg Polypropylenglykol mit 27 % Ethylenoxidendblock der Molmasse 4000 und 6,1 kg Dipropylenglykol. Das Gemisch wird auf 65°C unter Rühren erwärmt und 52 kg Polyethylenglykol 9000 zugegeben. Nach Homogenisierung werden 355 g Triethylendiamin zugegeben. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 21 kg rein-MDI gegeben und bei Erwärmung auf 50°C aufgeschmolzen. In die Schmelze wird die Polyhydroxylkomponente (a) mit einer solchen Geschwindigkeit dosiert, dass die Temperatur des Reaktionsgemisches 85°C nicht übersteigt. Die Zugabe ist nach zwei Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 2,24 % erhalten, das pastös ist und bei einer Temperatur von 48°C vollständig aufgeschmolzen ist.
c) Herstellung des erfindungsgemäßen Shape Memory Polymeren 7,5 kg Polyvinylbutyral mit einem Hydroxyläcluivalent von 12.200 g/Äquivalent werden mittels einer Stiftmühle pulverisiert (Teilchengröße 0,01 bis 0,1 mm). Das Pulver wird in einen Einschneckenextruder gegeben und bei 135°C aufgeschmolzen. In die Zuführungsöffnung des Extruders werden 1,05 kg des Prepolymeren von (b) derart über die Einstellung des Drehmoments zugegeben, dass die Verweilzeit 4 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen -9°C und +43°C mit einem Schmelzpunkt (DSC) bei 69°C. Der Verlustmodul nach DMA ist im Bereich zwischen -5°C und 55°C nahezu konstant. Das Polymer weist ein Formgedächtnis auf. Das Material kann durch Erwärmen auf 90 - 100°C durch Druckluft derart verformt werden, dass ein Schlauchdurchmesser von 25 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 69.

### Beispiel 10a

a) Herstellung der Polyhydroxylkomponente In einen 100 I Rührkessel werden nacheinander unter einem Stickstoff-Schleier gegeben: 9,5 kg Polypropylenglykol mit 27 % Ethylenoxidendblock der Molmasse 4000, 54,5 kg des PHD-Polyols von Beispiel 1 a und 2,25 kg Dipropylenglykol. Das Gemisch wird auf 65°C unter Rühren erwärmt und 22,25 kg Polyethylenglykol 9000 zugegeben. Nach Homogenisierung werden 50 g Triethylendiamin zugegeben. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 94,5 kg rein-MDI gegeben und bei Erwärmung auf 50°C aufgeschmolzen. In die Schmelze wird die Polyhydroxylkomponente (a) mit einer solchen Geschwindigkeit dosiert, dass die Temperatur des Reaktionsgemisches 85°C nicht übersteigt. Die Zugabe ist nach zwei Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 6,4 % erhalten, das sprödelastisch und bei einer Temperatur von 56°C vollständig aufgeschmolzen ist.
c) Herstellung des erfindungsgemäßen Shape Memory Polymeren 7,5 kg Polyvinylbutyral mit einem Hydroxyläquivalent von 12.200 g/Äquivalent werden mittels einer Stiftmühle pulverisiert (Teilchengröße 0,01 bis 0,1 mm). Das Pulver wird in einen Einschneckenextruder gegeben und bei 135°C aufgeschmolzen. In die Zuführungsöffnung des Extruders werden 6,25 kg des Prepolymeren von (b) derart über die Einstellung des Drehmoments zugegeben, dass die Verweilzeit 4 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen +6°C und +66°C mit einem Schmelzpunkt (DSC) bei 79°C. Der Verlustmodul nach DMA ist im Bereich zwischen 0°C und 65°C nahezu konstant. Das Polymer weist ein Formgedächtnis auf. Das Material kann durch Erwärmen auf 110 - 130°C durch Druckluft derart verformt werden, dass ein Schlauchdurchmesser von 25 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 81.

### Beispiel 11

a) Herstellung der Polyhydroxylkomponente In einen 100 I Rührkessel werden nacheinander unter einem Stickstoff-Schleier gegeben: 12,5 kg Polyethertriol auf Basis Glycerin und Propylenoxid mit einer Molmasse von 3000 und 3,25 kg Dipropylenglykol. Das Gemisch wird auf 65°C unter Rühren erwärmt und 65 kg Polycaprolactondiol der Molmasse 4000 zugegeben. Nach Homogenisierung werden 250 g Triethylendiamin zugegeben und darin gelöst. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 22,21 kg rein-MDI gegeben und unter Erwärmung auf 50°C aufgeschmolzen. In die Schmelze wird die Polyhydroxylkomponente (a) mit einer solchen Geschwindigkeit dosiert, dass die Temperatur des Reaktionsgemisches 80°C nicht übersteigt. Die Zugabe ist nach anderthalb Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 4,44 % erhalten, das pastös ist und bei einer Temperatur von 41 °C vollständig aufgeschmolzen ist.
c) Herstellung des erfindungsgemäßen Shape Memory Polymeren 7,5 kg Polyvinylbutyral mit einem Hydroxyläquivalent von 12.200 g/Äquivalent werden mittels einer Stiftmühle pulverisiert (Teilchengröße 0,01 bis 0,1 mm). Das Pulver wird in einen Einschneckenextruder gegeben und bei 140°C aufgeschmolzen. In die Zuführungsöffnung des Extruders werden 1,65 kg des Prepolymeren von (b) derart über die Einstellung des Drehmoments zugegeben, dass die Verweilzeit 5 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen -3°C und +53°C mit einem Erweichungspunkt (DSC) bei 75°C. Der Verlustmodul nach DMA ist im Bereich zwischen 0°C und 70°C nahezu konstant. Das Polymer weist ein Formgedächtnis auf. Das Material kann durch Erwärmen auf 110 - 125°C durch Druckluft derart verformt werden, dass ein Schlauchdurchmesser von 25 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 75.

### Beispiel 11a

a) Herstellung der Polyhydroxylkomponente In einen 100 l Rührkessel werden nacheinander unter einem Stickstoff-Schleier gegeben: 12,5 kg Polyethertriol auf Basis Glycerin und Propylenoxid mit einer Molmasse von 3000, 50,5 kg des PHD-Polyols von Beispiel 7a und 1,5 kg Dipropylenglykol. Das Gemisch wird auf 65°C unter Rühren erwärmt und 25 kg Polycaprolactondiol der Molmasse 4000 zugegeben. Nach Homogenisierung werden 50 g Triethylendiamin zugegeben und darin gelöst. Das Gemisch wird unter Abkühlung auf 28°C weiter gerührt. Sobald die Zieltemperatur erreicht ist, wird das Gemisch in Stufe (b) weiter verarbeitet.
b) Herstellung des Prepolymeren In einen 250 kg Rührreaktor mit Heizmantel und Stickstoffeinleitung werden 80 kg rein-MDI gegeben und unter Erwärmung auf 50°C aufgeschmolzen. In die Schmelze wird die Polyhydroxylkomponente (a) mit einer solchen Geschwindigkeit dosiert, dass die Temperatur des Reaktionsgemisches 80°C nicht übersteigt. Die Zugabe ist nach anderthalb Stunden beendet. Danach wird noch eine Stunde unter Abkühlung auf 70°C gerührt, um die Umsetzung weitestgehend zu vervollständigen. Es wird ein Prepolymer mit einem Isocyanatgehalt von 8,9 % erhalten, das sprödelastisch und bei einer Temperatur von 58°C vollständig aufgeschmolzen ist.
c) Herstellung des erfindungsgemäßen Shape Memory Polymeren 7,5 kg Polyvinylbutyral mit einem Hydroxyläquivalent von 12.200 g/Äquivalent werden mittels einer Stiftmühle pulverisiert (Teilchengröße 0,01 bis 0,1 mm). Das Pulver wird in einen Einschneckenextruder gegeben und bei 140°C aufgeschmolzen. In die Zuführungsöffnung des Extruders werden 7,65 kg des Prepolymeren von (b) derart über die Einstellung des Drehmoments zugegeben, dass die Verweilzeit 5 Minuten beträgt und das noch reagierende Gemisch durch eine 6mm-Runddüse mit zentralem Dorn von 2 mm ausgetragen wird. Man erhält ein Shape Memory Polymer in Form eines 6mm-Schlauches. Der Glasübergang liegt zwischen +8°C und +67°C mit einem Erweichungspunkt (DSC) bei 83°C. Der Verlustmodul nach DMA ist im Bereich zwischen 0°C und 70°C nahezu konstant. Das Polymer weist ein Formgedächtnis auf. Das Material kann durch Erwärmen auf 120 - 130°C durch Druckluft in einer Kalibrierung derart verformt werden, dass ein Schlauchdurchmesser von 25 mm erreicht wird. Dieser Durchmesser bleibt nach Abkühlen bestehen. Bei erneutem Erwärmen zieht sich der Schlauch wieder auf seinen ursprünglichen Durchmesser von 6 mm zurück. Das Material hat eine Shore-A-Härte von 85.

## Patentansprüche

1. Verfahren zur Herstellung von Formgedächtnis-Polymeren (Shape Memory Polymeren) durch vernetzende Formgebung aus linearen Oligomeren oder Polymeren durch Umsetzung mit verzweigten Reaktanden, **dadurch gekennzeichnet, dass** sie eine schwach vernetzte Polymerstruktur mit einer breiten Verteilung der Netzkettenabstände und einem temperaturunabhängigen Plateaumodul (tan δ) im Bereich von mindestens 10 K zwischen -20 und +90°C besitzen, wobei
a) pulverisierte lineare Polymere und/oder Oligomere mit mindestens zwei reaktiven Gruppen mit
b) einem pulverisierten, mindestens eine trifunktionelle Komponente enthaltenden isocyanatgruppenhaltigen Oligomeren und/oder Polymeren vermischt und
c) unter Erhitzen auf Temperaturen oberhalb 80°C umgesetzt werden.

2. Verfahren nach Anspruch 1, **dadurch gekennzeichnet, dass** als
a) lineare Polymere und/oder Oligomere Verbindungen verwendet werden, die durch Polymerisation aus mindestens einer ethylenisch ungesättigten Verbindung entstanden sind und die eine zusätzliche isocyanatreaktive Funktionalität in den Seitengruppen aufweisen, mit einer Molmasse zwischen ca. 20.000 und 4.000.000 und mindestens zwei aktiven Wasserstoffatomen, vorzugsweise Polyvinylbutyrale.

3. Verfahren nach Anspruch 1 oder 2, **dadurch gekennzeichnet, dass** als
b) isocyanatgruppenhaltige Oligomere und/oder Polymere Reaktionsprodukte verwendet werden, die aus Di- und/oder Polyisocyanaten oder einem Gemisch verschiedener Isocyanate mit einem oder mehreren Polyolen, von denen mindestens eines trifunktionell ist, bei Temperaturen von 40 bis 100°C, ggf. in Gegenwart von Katalysatoren, Füllstoffen, Pigmenten und /oder Flammschutzmitteln hergestellt werden, wobei die Polyole ausgewählt sind aus Polyetheralkoholgemischen, Polyharnstoff-Dispersionspolyolen oder Gemischen von kristallisationsfähigen Polyetheralkoholen, Polyetheresteralkoholen und/oder Polyetheresteralkoholen.

4. Verfahren nach Anspruch 3, **dadurch gekennzeichnet, dass** die Polyole zusätzlich nanoskalige reaktive, aktive oder inerte Füllstoffe aufweisen.

5. Verfahren nach einem der Ansprüche 1 bis 4, **dadurch gekennzeichnet, dass** a) Polyvinylbutyrale mit einem Hydroxyläquivalent 1.500 bis 20.000 und einer Molmasse von ca. 20.000 und 100.000 verwendet werden.

6. Verfahren nach einem der Ansprüche 1 bis 5, **dadurch gekennzeichnet, dass** b) ein Reaktionsprodukt oder Vorpolymer verwendet wird, das ein Verhältnis von Hydroxylgruppen zu den Isocyanatgruppen von 1 : 1,6 bis 1 : 5,5 besitzt, bevorzugt zwischen 1 : 2 und 1 : 3,5.

7. Verfahren nach einem der Ansprüche 1 bis 6, **dadurch gekennzeichnet, dass** c) die Formgebung bei Temperaturen von 80°C bis 180°C, bevorzugt bei Temperaturen von 110°C bis 160°C, erfolgt.

8. Verfahren nach einem der Ansprüche 1 bis 7, **dadurch gekennzeichnet, dass** die Umsetzung unter Formgebung in einem Extruder, in einem Kneter oder in einer Spritzgussmaschine erfolgt.

9. Verfahren nach einem der Ansprüche 1 bis 8, **dadurch gekennzeichnet, dass** ein Gemisch aus einem Polyvinylbutyral mit dem Hydroxyläquivalent 1.500 bis 20.000, vzw. 3.500 bis 15.000, mit 3 bis 20 Gew.-%, vzw. 3 - 10 Gew.-%, eines Prepolymeren mit 1 bis 15 Gew.-%, vzw. mit 5 bis 10 Gew.-%, Isocyanat-endgruppen bei Temperaturen von 80 bis 180°C, vzw. 110 bis 160°C, unter Formgebung zum Formgedächtnis-Polymer umgesetzt wird.

10. Verfahren nach einem der Ansprüche 1 bis 9, **dadurch gekennzeichnet, dass**
a) Polyvinylbutyral mit
b) einem Reaktionsprodukt aus einem Polyetheralkoholgemisch und einem Überschuss an Di- und/oder Polyisocyanaten mit 1 bis 15 Gew.-% reaktiver Isocyanatgruppen in einem Gewichtsverhältnis von 99 : 1 bis 40 : 60 umgesetzt wird.

11. Verfahren nach einem der Ansprüche 1 bis 9, **dadurch gekennzeichnet, dass**
a) Polyvinylbutyral mit
b) einem Reaktionsprodukt aus einem Polyharnstoff-Dispersionspolyol mit einem Überschuss an Di- und/oder Polyisocyanaten mit 1 bis 15 Gew.-% reaktiver Isocyanatgruppen umgesetzt wird.

12. Verfahren nach Anspruch 11, **dadurch gekennzeichnet, dass** als PolyharnstoffDispersionspolyole Depolymerisationsprodukte von Polyurethan-Weichschaumstoffen verwendet werden, vorzugsweise solche mit einer Zusammensetzung aus
| | | |
|---|---|---|
| (1) | Polyetheralkohol (Molmasse 2000 bis 6000) | 50 bis 85 Gew.-% |
| (2) | kurzkettiger Polyetheralkohol (Molmasse 200 bis 800) | 0,5 bis 5 Gew.-% |
| (3) | kurzkettiges Diol (Molmasse 100 bis 300) | 0,5 bis 25 Gew.-% |
| (4) | Additive aus dem Weichschaumstoff | 0,2 bis 2 Gew.-% |
| (5) | nanoskalige Oligo- oder Polyharnstoffe | 0,2 bis 20 Gew.-%. |

13. Verfahren nach einem der Ansprüche 1 bis 9, **dadurch gekennzeichnet, dass**
a) Polyvinylbutyral mit
b) einem Reaktionsprodukt aus einem Gemisch von kristallisationsfähigen Polyetheralkoholen, Polyetheresteralkoholen und/oder Polyetheresteralkoholen mit Molmassen von 1000 bis 4000 ggf. mit zusätzlich bis zu 20 Gew.-% Diolen und Di- und/oder Polyisocyanaten umgesetzt wird.

14. Formgedächtnis-Polymere hergestellt nach einem Verfahren gemäß einem der Ansprüche 1 bis 13.

15. Formgedächtnis-Polymere nach Anspruch 14, **dadurch gekennzeichnet, dass** sie aufgebaut sind aus
a) einem durch Polymerisation aus einer ethylenisch ungesättigten Verbindung entstandenen Polymeren mit zusätzlicher Funktionalität in den Seitengruppen mit einer Molmasse zwischen ca. 20.000 und 4.000.000 und mindestens zwei aktiven Wasserstoffatomen, und
b) einem isocyanatgruppenhaltigen Prepolymeren aus b1) einem nanoskalige Oligo- und/oder Polyharnstoffe enthaltenden Gemisch von Polyetheralkoholen und Diolen sowie weiteren Additiven, die aus der Depolymerisation von Polyurethan-Weichschaumstoffen herrühren und b2) mindestens einem Di- oder Polyisocyanat oder Gemischen davon mit einem Isocyanatgehalt von 1,5 bis 20% und einem Schmelzpunkt zwischen -10 und+85°C.

16. Formgedächtnis-Polymere nach Anspruch 14 oder 15, **dadurch gekennzeichnet, dass** sie aufgebaut sind aus
a) einem Polyvinylbutyral der Molmasse 100.000 bis 2.500.000 mit 2 bis 1000 freien Hydroxylgruppen im Molekül sowie
b) durch Umsetzung mit diesem aus einem isocyanatgruppenhaltigen Prepolymeren entstandenen Urethanbrücken, die aus einer oder mehreren Polyetherketten und mindestens einer Diolkette sowie an diesen angelagerten Oligo- oder Polyharnstoffketten bestehen.
